Europäisches Patentamt

European Patent Office

Office européen des brevets

(11) Publication number: **0 319 037 B1**

(19)

# EUROPEAN PATENT SPECIFICATION

(45) Date of publication of patent specification: **11.08.93**  (51) Int. Cl.⁵: **G11B 7/24**

(21) Application number: **88120172.7**

(22) Date of filing: **02.12.88**

(54) **Optical information recording medium.**

(30) Priority: **04.12.87 JP 307867/87**

(43) Date of publication of application:
**07.06.89 Bulletin 89/23**

(45) Publication of the grant of the patent:
**11.08.93 Bulletin 93/32**

(84) Designated Contracting States:
**DE FR GB**

(56) References cited:
**EP-A- 0 217 293**
**GB-A- 2 148 148**

(73) Proprietor: **MATSUSHITA ELECTRIC INDUSTRI-
AL CO., LTD.**
**1006, Oaza Kadoma**
**Kadoma-shi, Osaka-fu, 571(JP)**

(72) Inventor: **Yamada, Noboru**
**4-2, Kuzuhaoka-1-chome**
**Hirakata-shi(JP)**
Inventor: **Nagata, Ken'ichi**
**30-23, Miyukihigashimachi**
**Neyagawa-shi(JP)**
Inventor: **Nishiuchi, Kenichi**
**82-1028, Satanakamachi-4-chome**
**Moriguchi-shi(JP)**

(74) Representative: **Patentanwälte Leinweber &
Zimmermann**
**Rosental 7/II Aufg.**
**W-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

BACKGROUND OF THE INVENTION

The present invention relates to a rewritable optical information recording medium of phase-change type wherein the recording, erasing, reproduction, and rewriting of information are effected by irradiation of a high-density energy flux such as laser beams.

The technique is already known which comprises forming thin, light-absorbing film on a substrate of glass, resin or similar materials having a smooth surface, and then irradiating thereonto a laser beam converged into a micro spot to cause a local change of optical properties at the irradiated part, and thereby recording intended information. An example thereof is given in EP-A-0 217 293 In such a technique, by using, as the recording film, for example, a thin film of certain kinds of chalcogenide glass based on Te, Se and the like or thin film of metals such as AgZn and AuSb, it is possible to make the above-mentioned change of optical properties reversible and thereby to perform the recording, erasing and rewriting of information repeatedly. The recording and erasing are effected based on the difference in optical properties due to the reversible change of structure on atomic level between the crystal phase and the amorphous phase, or between the high temperature phase and the low temperature phase of the crystal phase, of respective recording films; the difference in the quantity of reflected light, or the quantity of transmitted light, of a specific wavelength is detected as a signal. In other words, the light absorbed to the recording medium is converted into heat to increase the temperature of the irradiated part. In recording, the irradiated part is brought to elevated temperature until it fuses and then quenched from the fused state, whereby an amorphous state or a high temperature phase is obtained. In erasing, these metastable phases are heated and maintained in the vicinity of glass transition temperature, whereby a crystal state or low temperature phase is obtained. Between the recorded state and the erased state, there exist difference in optical constants (e.g. refractive index and extinction coefficient), which can be detected as differences in such optical properties as reflectance and transmittance. In general practice, the recording film layer is used in a sandwiched structure with layers of dielectrics such as $SiO_2$ and ZnS to avoid vaporization and so forth of the film layer in repeated use. In the prior art, the thickness of each layer was selected so as to give an enhanced recording sensitivity, for example, to increase the absolute efficiency of light absorption in respective states and to give, at the same time, as wide a difference as possible in the quantity of reflected light or transmitted light before and after the change. In one example, a light-reflecting layer of Au, Al and the like was additionally applied onto the dielectrics layer of the side opposite to incident light.

The recording and erasing by means of irradiation of laser beam to the recording medium may be conducted in practice according to either of the following two methods. In one method, separate laser beams are used respectively for recording and for erasing, and previously recorded signals are erased by the preceding beam and new signals are recorded by the succeeding beam (namely, so-called overwriting is conducted). In the other method, a single laser beam is used, whose irradiation power can be changed in two steps of recording level and erasing level and is modulated therebetween in response to information signals, and new signals are directly written on the information track having signals recorded thereon (namely, so-called direct overwriting is conducted). In the former method, the laser power and irradiation time can be selected independently for recording and for erasing and hence no particular problem due to overwriting occurs. On the other hand, the latter method, which has come to be predominantly used, has the advantage of facilitating the design of optical heads but, on the other hand, brings about the following disadvantage. That is, since no previous erasing operation is conducted before recording, recording marks different in size and atomic ordering are produced between in the case of recording onto amorphous parts (that is, making the parts amorphous again) and in the case of recording onto crystal parts. In other words, a problem occurs wherein the dimensions of recording marks change in accordance with the state before recording delicately and resultantly the signal component which should have been erased before leaves some effect on new signals. The above problem is conceivably caused by the following two factors. One is the difference in optical absorbance existing between the amorphous state part and the crystal state part. The other is the difference in the energy required for melting (latent heat of melting) existing between the amorphous state part and the crystal state part.

SUMMARY OF THE INVENTION

An object of the present invention is to provide, as a means for solving the above problem, an optical information recording medium provided with a recording layer capable of changing reversibly between two optically detectable states in response to light irradiation conditions and with a plurality of additional layers, wherein the quantity L of irradiation light or the quantity E of heat which is necessary for increasing the temperature of the recording medium in said two states, with the recording layer in respective states a and b, to a given temperature are correlated by the equation $L_a \geq L_b$ or $E_a \geq E_b$, characterized in that the properties of each layer of said plurality of additional layers as well as the properties of said recording layer is selected to result in optical absorbances A at the wavelength of irradiation light for the recording medium, with the recording layer in respective states a and b, satisfying the equation $A_a \geq A_b$ and that in this way similar temperature-rise profiles are obtained for both states.

BRIEF DESCRIPTION OF THE DRAWINGS

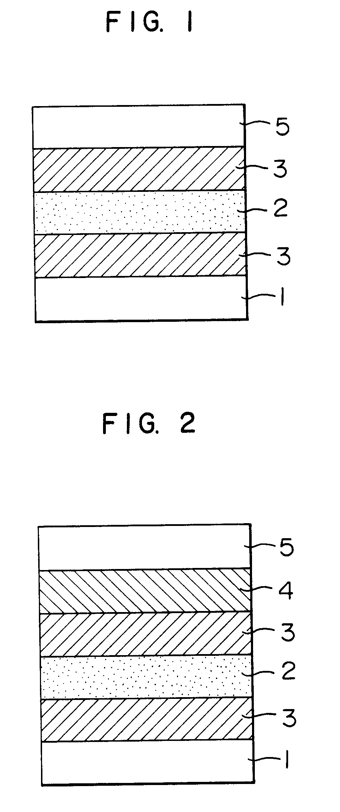

Figs. 1 and 2 each show a sectional view of an embodiment of the optical information recording medium according to the present invention.

DETAILED DESCRIPTION OF THE INVENTION

The optical information recording medium of the present invention is, as shown in Figs. 1 and 2, constructed by forming a recording layer 2, sandwiched between dielectrics 3 such as $SiO_2$ and ZnS, on a substrate 1 having a smooth surface made of resins such as polymethyl methacrylate (PMMA) and polycarbonate, metals such as Al and Cu, or glass. The material used for constituting the recording layer may be those in which the reversible phase change between amorphous state and crystal state is made use of, typically chalcogenides based on Te and Se, for example, GeTe, InSe, InSeTl, InSeTlCo, GeTeSb, GeTeSn, GeTeSnAu, InTe, InSeTe, InSbTe, SbSeTe and the like, and those in which the reversible phase change between crystal-crystal, for example, InSb, AgZn, AuSb and the like is utilized. A construction is also possible wherein a light reflecting layer 4 is additionally provided on the dielectrics layer of the side opposite to the incident laser beam. For the reflecting layer there may be used Au, Cu, Al, Ni, Cr, Pt, Pd, and alloys thereof. It is also possible to laminate a protecting sheet or plate 5 onto the upper-most part by vacuum deposition method or through adhesive resin layer.

The essential point of the present invention is to make the temperature-rise profiles of two states (recorded state and erased state) before and after recording substantially equal to each other, which can be achieved by appropriately selecting the film thickness of respective layers in the construction stated above. The film thickness of respective layers can be determined, based on the optical constant (refractive index or extinction coefficient), by calculation using, for example, the matrix method described on page 69 of "OPTICAL PROPERTIES OF THIN FILMS OF THE SOLID FILMS" (written by Heavens, publisehd from Dover Co., Ltd. in 1965). Also a method for numerical optimization of film thickness of respective layers with respect to optical constants of an optical information recording medium is given in GB-A-2 148 148. The selection of items to be calculated is a step forward from that in prior method; namely, not only the absolute values of optical absorbance of the recorded part and the unrecorded part but also the relative relationship between the two values is taken into consideration. In other words, conditions are preferentially adopted wherein the difference between the two values is small even if their absolute values are somewhat low or wherein, as will be described later, the absorbance of the more difficultly fusible state is higher.

Thus, it is important that when no difference in internal energy exists between the two states of before and after recording (namely, recorded state and erased state) the optical absorbances of the two states should be made equal to each other and, when a difference in the easiness of fusion exists owing to the difference of internal energy, the optical absorbance of the more difficultly fusible state should be made to be relatively higher, thereby to obtain in either state a similar temperature-rise profile in respect of both time and space. As compared with the amorphous state, the crystal state is low in internal energy and hence requires correspondingly higher energy in melting. Similarly, when the high temperature phase in the crystal phase is compared with the low temperature phase, the latter phase requires a higher energy for melting. Accordingly, when use is made of the phase change between the amorphous state and the crystal state or of the phase change between the high temperature phase and the low temperature phase, the optical absorbance of the crystal phase or the low temperature phase is respectively made relatively higher than that of the amorphous or high temperature phase, so that the respective former phases may absorb a greater amount of energy. Table 1 shows an embodiment of the present invention wherein the recording medium is shaped, so called, an optical disk whose recording layer is formed of $GeSb_2Te_4$, the dielectrics layer ZnS and the reflecting layer Au. The substrate is polycarbonate on which spiral tracks are formed for light guide. In this recording film, the latent heat of melting is about 6 cal/g higher for the crystalline phase than that of the amorphous phase and hence it is expected that said difference must be cancelled out by controlling the balance of optical absorbance for both states. It is shown in the Table that the respective optical absorbance of the recorded part and the erased part becomes higher or lower relatively to each other depending on the selection of the film thickness of respective layers. Evaluations were performed on a dynamic tester having a single laser diode of 830 nm in wave length for several combinations of these film thicknesses to examine comparatively the CN ratio and erasing ratio. In Table 1, (a) shows some examples of film thickness constitution and (b) shows the optical absorbance and reflectance before and after recording for 830 nm in wave length, as well as the CN ratio and erasing ratio for these examples.

Each constitution has the following characteristic. In the Table, samples No. 1, No. 2 and No. 3 each have a recording layer of 40 nm thickness and samples No. 4, No. 5 and No. 6 a recording layer of 20 nm thickness. In each sample group, the relation between the optical absorbance Aa at the amorphous part and the absorbance Ab at the crystal part was so selected as to be, in the order of the sample number, Aa > Ab, Aa = Ab and Aa < Ab. In the determination, recording signals were overwritten at a linear velocity of 15 m/sec and alternately at a frequency of 7 MHz or 5 MHz. The laser power level was 12-20 mW for recording (amorphizing) and 5-10 mW for erasing (crystallizing). The Table shows the best values of CN ratio (CNR) and erasing ratio in the above-mentioned range of power levels at 7 MHz. The Table reveals that when the optical absorbance in the amorphous state is higher than that in the crystal state no satisfactory erasing ratio is obtained though the CNR is high, and when the optical absorbance in the crystal state is equal to or higher than that in the amorphous state a high CNR and a high erasing ratio can be obtained simultaneously.

Thus, according to the optical information recording medium of the present invention, it has become possible to conduct overwriting using a single laser beam while maintaining a high CNR and a high erasing ratio.

## Table 1(a)

## Disk Constitution Examples

| Sample No. | Under coating layer | Recording layer | Upper coating layer | Reflecting layer |
|---|---|---|---|---|
| | ZnS | $GeSb_2Te_4$ | ZnS | Au |
| 1 | 86 nm | 40 nm | 151 nm | 20 nm |
| 2 | 86 nm | 40 nm | 145 nm | 20 nm |
| 3 | 43 nm | 40 nm | 140 nm | 20 nm |
| 4 | 86 nm | 20 nm | 173 nm | 20 nm |
| 5 | 48 nm | 20 nm | 162 nm | 20 nm |
| 6 | 65 nm | 20 nm | 162 nm | 20 nm |

Table 1(b)

Comparison of Characteristic of Each Disk

| Sample No. | | Amorphous | Crystal | CNR (dB) | Erasing ratio (dB) |
|---|---|---|---|---|---|
| 1 | Reflectance | 2.9% | 22.0% | 56dB | -20dB |
| | Absorbance | 70.0% | 62.6% | | |
| 2 | Reflectance | 6.0% | 18.0% | 54dB | -29dB |
| | Absorbance | 63.0% | 63.0% | | |
| 3 | Reflectance | 12.4% | 22.1% | 52dB | -34dB |
| | Absorbance | 52.9% | 57.9% | | |
| 4 | Reflectance | 0.4% | 16.8% | 56dB | -20dB |
| | Absorbance | 73.5% | 69.5% | | |
| 5 | Reflectance | 3.5% | 19.0% | 55dB | -28dB |
| | Absorbance | 59.5% | 59.5% | | |
| 6 | Reflectance | 2.9% | 14.1% | 54dB | -32dB |
| | Absorbance | 60.1% | 64.2% | | |

**Claims**

1. An optical information recording medium provided with a recording layer capable of changing reversibly between two optically detectable states in response to light irradiation conditions and with a plurality of additional layers, wherein the quantity L of irradiation light or the quantity E of heat which is necessary for increasing the temperature of the recording medium in said two states, with the recording layer in respective states a and b, to a given temperature are correlated by the equation $L_a \geq L_b$ or $E_a \geq E_b$, characterized in that the properties of each layer of said plurality of additional layers as well as the properties of said recording layer is selected to result in optical absorbances A at the wavelength of irradiation light for the recording medium, with the recording layer in respective states a and b, satisfying the equation $A_a \geq A_b$ and that in this way similar temperature-rise profiles are obtained for both states.

2. An optical information recording medium according to claim 1, wherein the thickness of respective layers of said optical information recording medium is selected to result in optical absorbances A at the wavelength of irradiation light for the recording medium with the recording layer in respective states a and b satisfying the equation $A_a \geq A_b$.

3. An optical information recording medium according to claim 1 or 2, wherein the recording layer (2) is sandwiched between dielectrics (3) on a substrate (1).

4. An optical information recording medium according to claim 3, wherein the dielectrics (3) are selected from $SiO_2$ and ZnS.

5

**5.** An optical information recording medium according to claim 3, wherein the substrate (1) is constituted from one material selected from polymethyl methacrylate, polycarbonate, Al, Cu and glass.

**6.** An optical information recording medium according to any of claims 1 to 5, wherein a light reflecting layer is additionally provided on the dielectric layer on the side opposite to the laser beam.

**7.** An optical information recording medium according to claim 6, wherein said light reflecting layer is constituted from one of the materials selected from Au, Cu, Al, Ni, Cr, Pt, Pd and alloys thereof.

**8.** An optical information recording medium according to any of claims 1 to 7, wherein a protecting sheet or a plate (5) is laminated onto the uppermost part by vacuum deposition or through adhesive resin layer.

**9.** An optical information recording medium according to any of claims 1 to 8, wherein state a is a crystal phase state of the recording layer and state b is an amorphous state.

**10.** An optical information recording medium according to claim 9, wherein for constituting the recording layer it is made use of chalcogenides based on Te and Se.

**11.** An optical information recording medium according to any of claims 1 to 8, wherein both states a and b of the recording layer are crystal phase states.

**12.** An optical information recording medium according to claim 11, wherein for constituting the recording layer one of the materials selected from InSb, AgZn and AuSb is used.

**Patentansprüche**

**1.** Optisches Informationsaufzeichnungsmedium mit einer Aufzeichnungsschicht, der ansprechend auf Lichtbestrahlungszustände ein umkehrbarer Wechsel zwischen zwei optisch nachweisbaren Zuständen möglich ist, und mit einer Mehrzahl von zusätzlichen Schichten, bei dem die Mengen L von Bestrahlungslicht oder die Wärmemengen E, die zum Erhöhen der Temperatur des Aufzeichnungsmediums in den zwei Zuständen, in denen sich die Aufzeichnungsschicht jeweils in den Zuständen a und b befindet, auf eine vorgegebene Temperatur über die Gleichung $L_a \geq L_b$ oder $E_a \geq E_b$ in Beziehung stehen, dadurch gekennzeichnet, daß sowohl die Eigenschaften von jeder Schicht aus der Mehrzahl von zusätzlichen Schichten als auch die Eigenschaften der Aufzeichnungsschicht so ausgewählt sind, daß sie bei der Wellenlänge des Bestrahlungslichtes optische Absorbanzen A des Aufzeichnungsmediums mit der Aufzeichnungsschicht in den jeweiligen Zuständen a und b zum Ergebnis haben, die die Gleichung $A_a \geq A_b$ erfüllen, und daß auf diese Weise ähnliche Temperaturanstiegsprofile für beide Zustände erhalten werden.

**2.** Optisches Informationsaufzeichnungsmedium nach Anspruch 1, bei dem die Dicke jeweiliger Schichten des optischen Informationsaufzeichnungsmediums so ausgewählt ist, daß bei der Wellenlänge des Bestrahlungslichtes optische Absorbanzen A des Aufzeichnungsmediums mit der Aufzeichnungsschicht in jeweiligen Zuständen a und b erhalten werden, die die Gleichung $A_a \geq A_b$ erfüllen.

**3.** Optisches Informationsaufzeichnungsmedium nach Anspruch 1 oder 2, bei dem die Aufzeichnungsschicht (2) auf einem Substrat (1) zwischen Dielektrika (3) angeordnet ist.

**4.** Optisches Informationsaufzeichnungsmedium nach Anspruch 3, bei dem die Dielektrika (3) ausgewählt sind aus $SiO_2$ und ZnS.

**5.** Optisches Informationsaufzeichnungsmedium nach Anspruch 3, bei dem das Substrat (1) gebildet ist aus einem Material ausgewählt aus Polymethylmethacrylat, Polycarbonat, Al, Cu und Glas.

**6.** Optisches Informationsaufzeichnungsmedium nach einem der Ansprüche 1 bis 5, bei dem auf der dem Laserstrahl entgegengesetzten Seite zusätzlich eine lichtreflektierende Schicht auf der dielektrischen Schicht vorgesehen ist.

**7.** Optisches Informationsaufzeichnungsmedium nach Anspruch 6, bei dem die lichtreflektierende Schicht gebildet ist aus einem der Materialien ausgewählt aus Au, Cu, Al, Ni, Cr, Pt, Pd und Legierungen davon.

**8.** Optisches Informationsaufzeichnungsmedium nach einem der Ansprüche 1 bis 7, bei dem eine Schutzlage oder eine Platte auf dem obersten Teil laminiert ist durch Vakuumbedampfen oder mittels einer haftenden Harzschicht.

**9.** Optisches Informationsaufzeichnungsmedium nach einem der Ansprüche 1 bis 8, bei dem der Zustand a ein Kristallphasenzustand der Aufzeichnungsschicht ist und der Zustand b ein amorpher Zustand ist.

**10.** Optisches Informationsaufzeichnungsmedium nach Anspruch 9, bei dem zur Bildung der Aufzeichnungsschicht Chalcogenide auf der Grundlage von Te und Se benutzt werden.

**11.** Optisches Informationsaufzeichnungsmedium nach einem der Ansprüche 1 bis 8, bei dem beide Zustände a und b der Aufzeichnungsschicht Kristallphasenzustände sind.

**12.** Optisches Informationsaufzeichnungsmedium nach Anspruch 11, bei dem zur Bildung der Aufzeichnungsschicht benutzt wird eines der Materialien ausgewählt aus InSb, AgZn und AuSb.

## Revendications

**1.** Support d'enregistrement d'information optique, comportant une couche d'enregistrement capable de passer de façon réversible d'un état à un autre état, tous deux optiquement détectables, en réponse à des conditions d'irradiation lumineuse, et plusieurs couches supplémentaires, et dans lequel les quantités L de lumière d'irradiation ou les quantités E de chaleur qui sont nécessaires pour élever à un niveau donné la température du support d'enregistrement respectivement dans les deux états (la couche d'enregistrement étant respectivement dans les états a et b) sont liées par la relation $L_a \geq L_b$ ou $E_a \geq E_b$, caractérisé en ce que les propriétés de chacune desdites couches supplémentaires, ainsi que les propriétés de ladite couche d'enregistrement sont choisies de sorte que les absorbances optiques A, à la longueur d'onde de la lumière d'irradiation du support d'enregistrement, satisfont la relation $A_a \geq A_b$ dans les états a et b respectifs de la couche d'enregistrement, et que des profils similaires d'élévation de température sont obtenus de cette manière pour les deux états.

**2.** Support d'enregistrement d'information optique selon la revendication 1, dans lequel l'épaisseur des différentes couches dudit support d'enregistrement d'information optique est choisie de sorte que les absorbances optiques A, à la longueur d'onde de la lumière d'irradiation du support d'enregistrement, satisfont la relation $A_a \geq A_b$ dans les états a et b respectifs de la couche d'enregistrement.

**3.** Support d'enregistrement d'information optique selon la revendication 1 ou 2, dans lequel la couche d'enregistrement (2) est prise en sandwich entre des couches de diélectrique (3) sur un substrat (1).

**4.** Support d'enregistrement d'information optique selon la revendication 3, dans lequel le diélectrique (3) est choisi entre $SiO_2$ et ZnS.

**5.** Support d'enregistrement d'information optique selon la revendication 3, dans lequel le substrat (1) est constitué par une matière choisie entre le polyméthacrylate de méthyle, le polycarbonate, Al, Cu et le verre.

**6.** Support d'enregistrement d'information optique selon l'une quelconque des revendications 1 à 5, dans lequel une couche réfléchissant la lumière est prévue en outre sur la couche de diélectrique du côté opposé au faisceau de laser.

**7.** Support d'enregistrement d'information optique selon la revendication 6, dans lequel ladite couche réfléchissant la lumière est réalisée en l'une des matières choisies entre Au, Cu, Al, Ni, Cr, Pt, Pd et des alliages de ces métaux.

8. Support d'enregistrement d'information optique selon l'une quelconque des revendications 1 à 7, dans lequel une feuille ou une plaque protectrice (5) est appliquée à la partie toute supérieure par dépôt sous vide ou au moyen d'une couche de résine adhésive.

9. Support d'enregistrement d'information optique selon l'une quelconque des revendications 1 à 8, dans lequel l'état a est un état en phase cristalline de la couche d'enregistrement et l'état b est un état amorphe.

10. Support d'enregistrement d'information optique selon la revendication 9, dans lequel il est fait usage, pour la constitution de la couche d'enregistrement, de chalcogénures à base de Te et de Se.

11. Support d'enregistrement d'information optique selon l'une quelconque des revendications 1 à 8, dans lequel les deux états a et b de la couche d'enregistrement sont des états en phase cristalline.

12. Support d'enregistrement d'information optique selon la revendication 11, dans lequel il est fait usage, pour la constitution de la couche d'enregistrement, d'une matière choisie entre InSb, AgZn et AuSb.

FIG. I

FIG. 2